# EUROPÄISCHE PATENTANMELDUNG

(11) **EP 4 495 890 A1**
(43) Veröffentlichungstag der Anmeldung: **22.01.2025**
(21) Anmeldenummer: 23186185.7
(22) Anmeldetag: 18.07.2023
(51) Int. Cl.: G06V 10/26, G06V 10/774, G06V 10/82, G06V 20/56

(54) **VERFAHREN UND VORRICHTUNG ZUM VERARBEITEN VON BILDDATEN**

(71) Anmelder: Robert Bosch GmbH, 70442 Stuttgart (DE)
(72) Erfinder: Laube, Kevin Alexander, 72108 Rottenburg Wurmlingen (DE)

(57) **Zusammenfassung**

Verfahren, beispielsweise computerimplementiertes Verfahren, zum Verarbeiten von, beispielsweise wenigstens, ein Eingangsbild charakterisierenden Bilddaten, aufweisend: Bereitstellen des Eingangsbilds, Ermitteln erster Informationen, die eine semantische Segmentierung des Eingangsbilds charakterisieren, mittels eines Diskriminators, Ermitteln zweiter Informationen, die beispielsweise von den ersten Informationen verschieden sind, und die mit dem Eingangsbild assoziierte Eigenschaften charakterisieren, mittels des Diskriminators.

## Beschreibung

### Stand der Technik

Die Offenbarung bezieht sich auf ein Verfahren zum Verarbeiten von Bilddaten.

Die Offenbarung bezieht sich ferner auf eine Vorrichtung zum Verarbeiten von Bilddaten.

Eine Verarbeitung von Bilddaten findet beispielsweise bei einer Auswertung von visuellen Informationen im Bereich des Straßenverkehrs Anwendung. Beispielsweise sind etwa 90 % der Informationen, die ein menschlicher Fahrer zum Führen eines Fahrzeugs im Straßenverkehr benötigt, visuelle Informationen. Für ein zumindest teilweise automatisiertes Führen von Fahrzeugen ist es daher wichtig, Bilddaten, wie sie z.B. bei einer Überwachung eines Fahrzeugumfelds erhalten, beispielsweise aufgenommen, werden, inhaltlich zutreffend auszuwerten. Von besonderer Bedeutung z.B. für eine Fahraufgabe ist eine Klassifikation der Bilddaten z.B. dahingehend, welche verkehrsrelevanten Objekte in ihnen enthalten sind, wie beispielsweise andere Verkehrsteilnehmer, Fahrbahnmarkierungen, Hindernisse und Verkehrszeichen.

Entsprechende Bildklassifikatoren können mit Trainingsbildern, die z.B. in einer Vielzahl von Verkehrssituationen aufgenommen wurden, trainiert werden. Das Beschaffen der Trainingsbilder ist vergleichsweise schwierig und teuer. In der Realität selten vorkommende Verkehrssituationen können in einem Datensatz mit Trainingsbildern zahlenmäßig u.U. unterrepräsentiert sein, so dass der Bildklassifikator ihre richtige Einordnung nicht optimal lernen kann. Weiterhin kann bei konventionellen Ansätzen z.B. viel manuelle Arbeit notwendig sein, um Trainingsbilder, bzw. deren Bildelemente (z.B. "Pixel"), mit zugehörigen Soll-Klassenzuordnungen ("ground truth") zu "labeln".

Daher werden bei manchen konventionellen Ansätzen z.B. zusätzlich auch synthetisch erzeugte Trainingsdaten verwendet, die z.B. mit einem Generator auf der Basis von Generative Adversarial Networks, GAN, erzeugt werden. Ein solcher Generator für Radardaten ist aus der DE 10 2018 204 494 B3 bekannt.

### Offenbarung der Erfindung

Beispielhafte Ausführungsformen beziehen sich auf ein Verfahren, beispielsweise ein computerimplementiertes Verfahren, zum Verarbeiten von, beispielsweise wenigstens, ein Eingangsbild charakterisierenden Bilddaten, aufweisend: Bereitstellen des Eingangsbilds, Ermitteln erster Informationen, die eine semantische Segmentierung des Eingangsbilds charakterisieren, mittels eines Diskriminators, Ermitteln zweiter Informationen, die beispielsweise von den ersten Informationen verschieden sind, und die mit dem Eingangsbild assoziierte Eigenschaften charakterisieren, mittels des Diskriminators. Bei weiteren beispielhaften Ausführungsformen können die zweiten Informationen beispielsweise für ein Training des Diskriminators und/oder ggf. weiterer vorhandener Komponenten verwendet werden.

Bei weiteren beispielhaften Ausführungsformen sind die Bilddaten beispielsweise mit Kamerabildern assoziiert. Das Eingangsbild ist somit z.B. ein Kamerabild.

Bei weiteren beispielhaften Ausführungsformen ist der Begriff des Bildes z.B. nicht auf statische Kamerabilder beschränkt, sondern umfasst beispielsweise auch Videobilder, Radarbilder, LIDAR-Bilder und Ultraschallbilder und sonstige in Form von Bilddaten charakterisierbare Daten.

Bei weiteren beispielhaften Ausführungsformen weist das Bereitstellen des Eingangsbilds wenigstens eines der folgenden Elemente auf: a) Ermitteln, beispielsweise Erzeugen, des Eingangsbilds mittels eines Generators, beispielsweise basierend auf semantischen Informationen und basierend auf dritten Informationen, die Eigenschaften des zu ermittelnden Eingangsbilds charakterisieren, b) Empfangen des Eingangsbilds von einer weiteren Einheit, c) Verwenden eines realen Eingangsbilds.

Bei weiteren beispielhaften Ausführungsformen ist vorgesehen, dass die mit dem Eingangsbild assoziierten Eigenschaften einen Stil des Eingangsbilds charakterisieren, beispielsweise einen Stil wenigstens eines individuellen Bildelements, beispielsweise einen jeweiligen Stil mehrerer unterschiedlicher Bildelemente, beispielsweise einen jeweiligen Stil aller Bildelemente des Eingangsbilds.

Bei weiteren beispielhaften Ausführungsformen ist vorgesehen, dass die zweiten Informationen a) für mehrere, beispielsweise alle, Bildelemente des Eingangsbilds jeweils mittels eines Vektors charakterisierbar sind, beispielsweise repräsentiert werden, und/oder b) mittels eines dreidimensionalen Tensors charakterisierbar sind, beispielsweise repräsentiert werden.

Bei weiteren beispielhaften Ausführungsformen ist vorgesehen, dass das Verfahren aufweist: Verwenden der ersten Informationen und/oder der zweiten Informationen, beispielsweise für wenigstens eines der folgenden Elemente: a) Trainieren eines bzw. des Generators zum Erzeugen von Bildern, b) Rekonstruieren, beispielsweise bildelementweise Ermittlung, von Informationen, beispielsweise mit Rauschen assoziierten Informationen, die, beispielsweise von einem bzw. dem Generator, zur Bildung des Eingangsbilds verwendet worden sind, c) Vereinfachung eines Trainings wenigstens eines zur Verarbeitung der Bilddaten verwendbaren neuronalen Netzes.

Bei weiteren beispielhaften Ausführungsformen ist vorgesehen, dass der Diskriminator und/oder der Generator wenigstens ein, beispielsweise künstliches, beispielsweise tiefes, neuronales Netz aufweist.

Bei weiteren beispielhaften Ausführungsformen ist vorgesehen, dass das Verfahren aufweist: Verwenden einer Encoder-Decoder-Einrichtung als Diskriminator, wobei beispielsweise die Encoder-Decoder-Einrichtung eine Encoder-Struktur und eine Decoder-Struktur aufweist, wobei die Encoder-Struktur dazu ausgebildet ist, ein Bild, beispielsweise das Eingangsbild, mittels mehrerer Verarbeitungsschichten in eine informationsreduzierte Repräsentation zu transformieren und die informationsreduzierte Repräsentation der Decoder-Struktur zuzuführen, wobei beispielsweise die Decoder-Struktur dazu ausgebildet ist, basierend auf der informationsreduzierten Repräsentation die ersten Informationen und die zweiten Informationen zu bilden.

Bei weiteren beispielhaften Ausführungsformen ist vorgesehen, dass das Verfahren aufweist: Ermitteln der semantischen Segmentierung des Eingangsbilds mittels des Diskriminators, wobei die semantische Segmentierung mehreren Bildelementen, beispielsweise jedem Bildelement, des Eingangsbilds eine semantische Bedeutung zuordnet, wobei beispielsweise die semantische Bedeutung mit einer vorgebbaren Anzahl von Klassen, beispielsweise N vielen Klassen, assoziiert ist, wobei optional eine Klasse zum Signalisieren vorgesehen ist, ob ein betreffendes Bildelement als nicht real, beispielsweise "fake", bewertet wird.

Bei weiteren beispielhaften Ausführungsformen ist vorgesehen, dass alternativ oder ergänzend zu dem Diskriminator mehrere Modelle vorgesehen sind, wobei beispielsweise ein erstes Modell dazu ausgebildet ist, einen Stil wenigstens eines individuellen Bildelements des Eingangsbilds zu ermitteln, wobei beispielsweise ein zweites Modell dazu ausgebildet ist, die semantische Segmentierung des Eingangsbilds zu ermitteln.

Bei weiteren beispielhaften Ausführungsformen kann der Diskriminator z.B. mehrere Modelle aufweisen, wobei beispielsweise ein erstes Modell dazu ausgebildet ist, einen Stil wenigstens eines individuellen Bildelements des Eingangsbilds zu ermitteln, wobei beispielsweise ein zweites Modell dazu ausgebildet ist, die semantische Segmentierung des Eingangsbilds zu ermitteln.

Bei weiteren beispielhaften Ausführungsformen kann, z.B. anstelle einer Encoder-Decoder-Einrichtung, wenigstens ein anderes Modell bzw. ein anderer Modelltyp zur Ermittlung der semantischen Segmentierung des Eingangsbilds und/oder zur Ermittlung des Stils, z.B. wenigstens eines individuellen Bildelements, verwendet werden. Beispielsweise sind bei manchen Ausführungsformen Modelle zur semantischen Segmentierung verwendbar, die strukturell anders aufgebaut sind als die beispielhaft genannte Encoder-Decoder-Einrichtung, die aber dennoch z.B. pro Bildelement eine Vorhersage (z.B. im Sinne der semantischen Segmentierung) treffen. Bei weiteren beispielhaften Ausführungsformen kann somit z.B. auch wenigstens ein solches Modell als Diskriminator verwendet werden, und, beispielsweise, bei weiteren beispielhaften Ausführungsformen, z.B. um eine Ermittlung des Stils z.B. wenigstens eines Bildelements, z.B. style-prediction, erweitert werden.

Bei weiteren beispielhaften Ausführungsformen ist vorgesehen, dass das Verfahren wenigstens eines der folgenden Elemente aufweist: a) Verwenden eines bzw. des Generators, beispielsweise zum Erzeugen des Eingangsbilds und/oder weiterer Eingangsbilder für den Diskriminator, b) Erzeugen weiterer Eingangsbilder für den Diskriminator basierend auf den ersten Informationen und den zweiten Informationen.

Bei weiteren beispielhaften Ausführungsformen ist vorgesehen, dass das Verfahren aufweist: Trainieren wenigstens eines Elements von a) dem Diskriminator und/oder von b) dem Generator, beispielsweise mittels Rückführen der ersten Informationen und/oder der zweiten Informationen als Eingangsgrößen für den Generator, und, optional, Verwenden des, beispielsweise trainierten, Diskriminators und/oder des, beispielsweise trainierten, Generators.

Weitere beispielhafte Ausführungsformen beziehen sich auf ein Verfahren, beispielsweise ein computerimplementiertes Verfahren, zum Bereitstellen von Bilddaten, aufweisend: Trainieren eines Generators zum Erzeugen von Bilddaten mittels einem Verfahren gemäß den Ausführungsformen, und, optional, Erzeugen der Bilddaten mittels des, z.B. trainierten, Generators.

Beispielsweise ist der Diskriminator gemäß beispielhaften Ausführungsformen für ein Training des Generators verwendbar. Beispielsweise wird der Diskriminator gemäß weiteren beispielhaften Ausführungsformen nach dem Training des Generators, z.B. zumindest zeitweise, nicht mehr verwendet.

Bei weiteren beispielhaften Ausführungsformen ist vorgesehen, dass die mittels des, z.B. trainierten, Generators erzeugten Bilddaten, die z.B. synthetische Bilder charakterisieren, z.B. zum Trainieren wenigstens eines weiteren Modells, also z.B. eines "Downstream-Modells" verwendet werden, also z.B. eines anderen Netzes, das z.B. weiter hinten in einer Pipeline (z.B. Verarbeitungspipeline) steht, wobei das wenigstens eine weitere Modell z.B. für eine semantische Segmentierung und/oder eine Objektdetektion vorgesehen, beispielsweise ausgebildet, ist. Bei weiteren beispielhaften Ausführungsformen können solche Downstream-Modelle und z.B. der Diskriminator gemäß beispielhaften Ausführungsformen unterschiedliche Architekturen und/oder Größen (z.B. als Faktoren für Performance) und/oder Ziele beim Trainieren (z.B. segmentation vs. Truth/false prediction) aufweisen.

Weitere beispielhafte Ausführungsformen beziehen sich auf eine Vorrichtung zur Ausführung des Verfahrens gemäß den Ausführungsformen.

Weitere beispielhafte Ausführungsformen beziehen sich auf ein computerlesbares Speichermedium, umfassend Befehle, die bei der Ausführung durch einen Computer diesen veranlassen, das Verfahren gemäß den Ausführungsformen auszuführen.

Weitere beispielhafte Ausführungsformen beziehen sich auf ein Computerprogramm, umfassend Befehle, die bei der Ausführung des Programms durch einen Computer diesen veranlassen, das Verfahren gemäß den Ausführungsformen auszuführen.

Weitere beispielhafte Ausführungsformen beziehen sich auf ein Datenträgersignal, das das Computerprogramm gemäß den Ausführungsformen überträgt und/oder charakterisiert.

Weitere beispielhafte Ausführungsformen beziehen sich auf eine Verwendung des Verfahrens gemäß den Ausführungsformen und/oder der Vorrichtung gemäß den Ausführungsformen und/oder des computerlesbaren Speichermediums gemäß den Ausführungsformen und/oder des Computerprogramms gemäß den Ausführungsformen und/oder des Datenträgersignals gemäß den Ausführungsformen für wenigstens eines der folgenden Elemente: a) Erzeugen von Bildern, beispielsweise fotorealistischer Bilder, beispielsweise für ein Training von Verfahren und/oder Systemen, die Bilder verarbeiten, beispielsweise für Anwendungen im Bereich des autonomen Fahrens, b) multi-modale semantische Synthese von Bildern, c) Modifizieren von, beispielsweise bestehenden realen oder synthetischen, Bildern, d) Steigern einer Effizienz für das Trainieren des Diskriminators und/oder Generators, e) Erhöhen einer Stabilität für das Trainieren des Diskriminators und/oder Generators, f) Vereinfachen von gemischten Strukturen aufweisend Strukturmerkmale von Generative Adversarial Networks, GAN, und Netzen vom Autoencoder-Typ.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Flussdiagramm gemäß beispielhaften Ausführungsformen,
- Fig. 2: schematisch ein vereinfachtes Flussdiagramm gemäß beispielhaften Ausführungsformen,
- Fig. 3: schematisch ein vereinfachtes Flussdiagramm gemäß beispielhaften Ausführungsformen,
- Fig. 4: schematisch ein vereinfachtes Flussdiagramm gemäß beispielhaften Ausführungsformen,
- Fig. 5: schematisch ein vereinfachtes Flussdiagramm gemäß beispielhaften Ausführungsformen,
- Fig. 6: schematisch ein vereinfachtes Blockdiagramm gemäß beispielhaften Ausführungsformen,
- Fig. 7: schematisch ein vereinfachtes Flussdiagramm gemäß beispielhaften Ausführungsformen,
- Fig. 8: schematisch ein vereinfachtes Flussdiagramm gemäß beispielhaften Ausführungsformen,
- Fig. 9: schematisch ein vereinfachtes Blockdiagramm gemäß beispielhaften Ausführungsformen,
- Fig. 10: schematisch Aspekte gemäß beispielhaften Ausführungsformen,
- Fig. 11: schematisch Aspekte gemäß beispielhaften Ausführungsformen,
- Fig. 12: schematisch Aspekte von Verwendungen gemäß beispielhaften Ausführungsformen.

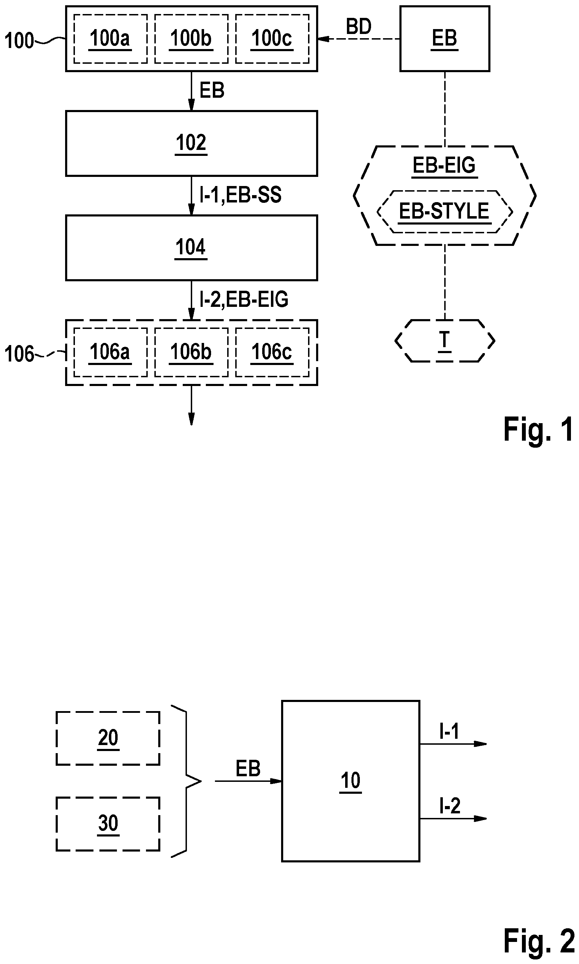

Beispielhafte Ausführungsformen, vgl. z.B. Fig. 1, 2, beziehen sich auf ein Verfahren, beispielsweise ein computerimplementiertes Verfahren, zum Verarbeiten von, beispielsweise wenigstens, ein Eingangsbild EB charakterisierenden Bilddaten BD, aufweisend: Bereitstellen 100 des Eingangsbilds EB, Ermitteln 102 erster Informationen 1-1, die eine semantische Segmentierung EB-SS des Eingangsbilds EB charakterisieren, mittels eines Diskriminators 10 (Fig. 2), Ermitteln 104 (Fig. 1) zweiter Informationen I-2, die beispielsweise von den ersten Informationen I-1 verschieden sind, und die mit dem Eingangsbild EB assoziierte Eigenschaften EB-EIG charakterisieren, mittels des Diskriminators 10. Mit anderen Worten sind demnach sowohl die ersten Informationen I-1 als auch die zweiten Informationen I-2 mittels des Diskriminators 10 ermittelbar, z.B. gleichzeitig bzw. in zeitlich zumindest teilweise überlappender Weise oder bei weiteren beispielhaften Ausführungsformen auch sequentiell. Bei weiteren beispielhaften Ausführungsformen können die zweiten Informationen I-2 beispielsweise für ein Training des Diskriminators 10 und/oder ggf. weiterer vorhandener Komponenten (z.B. Generator 20, s.u. zu Fig. 2) verwendet werden.

Bei weiteren beispielhaften Ausführungsformen, Fig. 1, sind die Bilddaten BD beispielsweise mit Kamerabildern assoziiert. Das Eingangsbild EB ist somit z.B. ein Kamerabild.

Bei weiteren beispielhaften Ausführungsformen ist der Begriff des Bildes z.B. nicht auf, z.B. statische, Kamerabilder beschränkt, sondern umfasst beispielsweise auch Videobilder, Radarbilder, LIDAR-Bilder und Ultraschallbilder und sonstige in Form von Bilddaten bzw. Bildern charakterisierbare Daten.

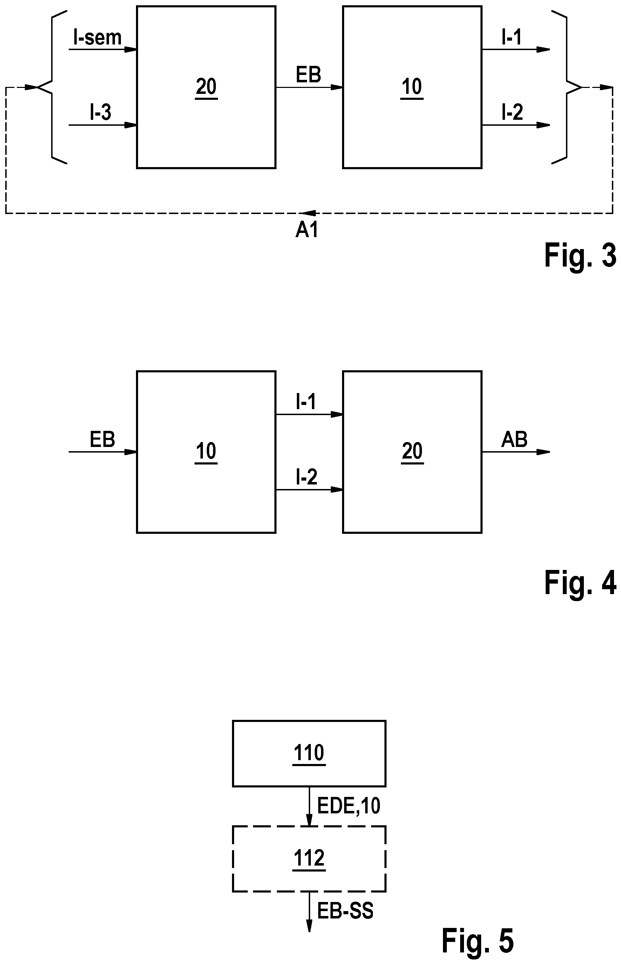

Bei weiteren beispielhaften Ausführungsformen, Fig. 1, weist das Bereitstellen 100 des Eingangsbilds EB wenigstens eines der folgenden Elemente auf: a) Ermitteln 100a des Eingangsbilds EB mittels eines Generators 20 (Fig. 2), beispielsweise basierend auf semantischen Informationen I-sem, s. Fig. 3, und basierend auf dritten Informationen I-3, die Eigenschaften des zu ermittelnden Eingangsbilds EB charakterisieren, b) Empfangen 100b (Fig. 1) des Eingangsbilds EB von einer weiteren Einheit 30 (Fig. 2) (z.B. Kamera und/oder, z.B. andere, Vorrichtung zur Synthese von Bildern, nicht gezeigt), c) Verwenden 100c eines realen Eingangsbilds.

Bei weiteren beispielhaften Ausführungsformen, Fig. 1, ist vorgesehen, dass die mit dem Eingangsbild EB assoziierten Eigenschaften EB-EIG einen Stil EB-STYLE des Eingangsbilds EB charakterisieren, beispielsweise einen Stil wenigstens eines individuellen Bildelements, beispielsweise einen jeweiligen Stil mehrerer unterschiedlicher Bildelemente, beispielsweise einen jeweiligen Stil aller Bildelemente des Eingangsbilds EB. Somit ist bei weiteren beispielhaften Ausführungsformen beispielsweise ein bildelementweiser Stil des Eingangsbilds mittels der Eigenschaften EB-EIG bzw. mittels der zweiten Informationen I-2 beschreibbar.

Bei weiteren beispielhaften Ausführungsformen, Fig. 1, ist vorgesehen, dass die zweiten Informationen I-2 a) für mehrere, beispielsweise alle, Bildelemente des Eingangsbilds EB jeweils mittels eines Vektors charakterisierbar sind, beispielsweise repräsentiert werden, und/oder b) mittels eines z.B. dreidimensionalen Tensors T charakterisierbar sind, beispielsweise repräsentiert werden. Beispielsweise kann der Tensor T strukturell in zwei Dimensionen einer jeweiligen Anzahl von Bildelementen des Eingangsbilds EB entsprechen, und eine dritte Dimension des Tensors T enthält, z.B. je Bildelement des Eingangsbilds, ein oder mehrere Elemente, die z.B. den bildelementweise Stil charakterisieren.

Bei weiteren beispielhaften Ausführungsformen, Fig. 1, ist vorgesehen, dass das Verfahren aufweist: Verwenden 106 der ersten Informationen I-1 und/oder der zweiten Informationen I-2, beispielsweise für wenigstens eines der folgenden Elemente: a) Trainieren 106a eines bzw. des Generators 20 (Fig. 2, 3) zum Erzeugen von Bildern, beispielsweise mittels der Rückführung A1 (Fig. 3), gemäß der die ersten Informationen I-1 des Diskriminators 10 dem Generator 20 z.B. als semantische Informationen I-sem zuführbar sind, und gemäß der die zweiten Informationen I-2 des Diskriminators 10 dem Generator 20 z.B. als dritte Informationen I-3 zuführbar sind, b) Rekonstruieren 106b, beispielsweise bildelementweise Ermittlung, von Informationen, beispielsweise mit einem Stil bzw. mit einem Rauschen assoziierten Informationen, die, beispielsweise von einem bzw. dem Generator 20, zur Bildung des Eingangsbilds EB verwendet worden sind, c) Vereinfachung 106c eines Trainings wenigstens eines zur Verarbeitung der Bilddaten BD verwendbaren neuronalen Netzes.

Bei weiteren beispielhaften Ausführungsformen, Fig. 2, 3, ist vorgesehen, dass der Diskriminator 10 und/oder der Generator 20 wenigstens ein, beispielsweise künstliches, beispielsweise tiefes, neuronales Netz aufweist.

Fig. 4 zeigt schematisch ein Flussdiagramm gemäß weiteren beispielhaften Ausführungsformen, bei dem die mittels des Diskriminators 10 ermittelbaren ersten und zweiten Informationen I-1, I-2 dem Generator 20 zugeführt werden, der auf dieser Basis z.B. wenigstens ein weiteres Bild, z.B. Ausgangsbild AB, ermittelt.

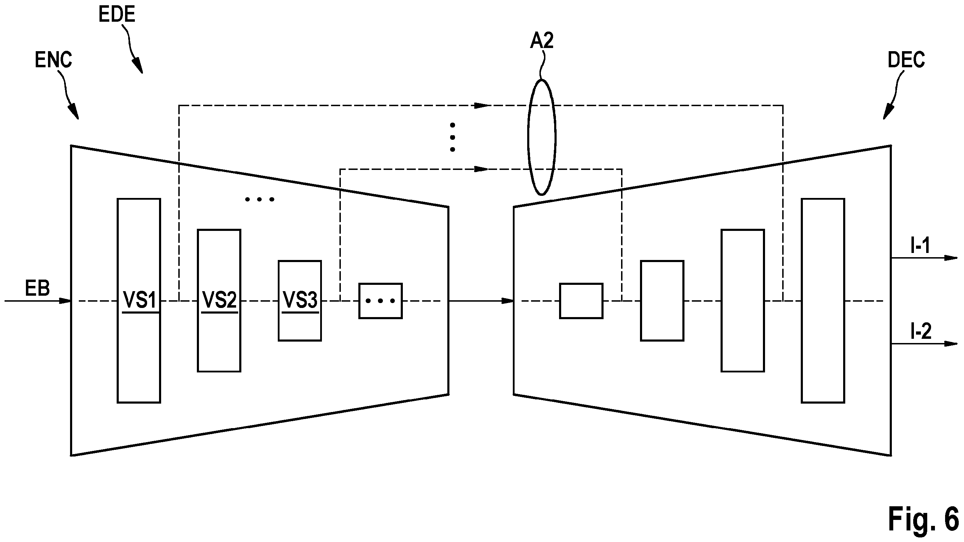

Bei weiteren beispielhaften Ausführungsformen, Fig. 5, 6, ist vorgesehen, dass das Verfahren aufweist: Verwenden 110 einer Encoder-Decoder-Einrichtung EDE als Diskriminator 10, wobei beispielsweise die Encoder-Decoder-Einrichtung EDE eine Encoder-Struktur ENC (Fig. 6) und eine Decoder-Struktur DEC aufweist, wobei die Encoder-Struktur ENC dazu ausgebildet ist, ein Bild, beispielsweise das Eingangsbild EB, mittels mehrerer Verarbeitungsschichten VS1, VS2, VS3, ... in eine informationsreduzierte Repräsentation zu transformieren und die informationsreduzierte Repräsentation der Decoder-Struktur DEC zuzuführen, wobei beispielsweise die Decoder-Struktur DEC dazu ausgebildet ist, basierend auf der informationsreduzierten Repräsentation die ersten Informationen I-1 und die zweiten Informationen I-2 zu bilden.

Bei weiteren beispielhaften Ausführungsformen weist die Encoder-Decoder-Einrichtung EDE mindestens eine Direktverbindung zwischen einer Verarbeitungsschicht VS1, VS3 der Encoder-Struktur ENC und einer Verarbeitungsschicht der Decoder-Struktur DEC, z.B. unter zumindest teilweiser Umgehung der informationsreduzierten Repräsentation, auf. Dann kann selektiv z.B. ein besonders relevanter Anteil der Information aus der Encoder-Struktur ENC in die Decoder-Struktur DEC überführt werden, also z.B. ohne einen "Flaschenhals" der maximal informationsreduzierten Repräsentation passieren zu müssen. Die optionalen Direktverbindungen sind in Fig. 6 kollektiv mit dem Bezugszeichen A2 bezeichnet.

Bei weiteren beispielhaften Ausführungsformen kann die in Fig. 6 abgebildete Struktur zur Ausbildung einer sog. U-Net-Konfiguration verwendet werden. Bei weiteren beispielhaften Ausführungsformen, Fig. 5, ist vorgesehen, dass das Verfahren aufweist: Ermitteln 112 der semantischen Segmentierung EB-SS des Eingangsbilds EB mittels des Diskriminators 10, wobei die semantische Segmentierung EB-SS mehreren Bildelementen, beispielsweise jedem Bildelement, des Eingangsbilds EB eine semantische Bedeutung zuordnet, wobei beispielsweise die semantische Bedeutung mit einer vorgebbaren Anzahl von Klassen, beispielsweise N vielen Klassen, assoziiert ist, wobei optional eine Klasse zum Signalisieren vorgesehen ist, ob ein betreffendes Bildelement als nicht real, beispielsweise "fake", bewertet wird.

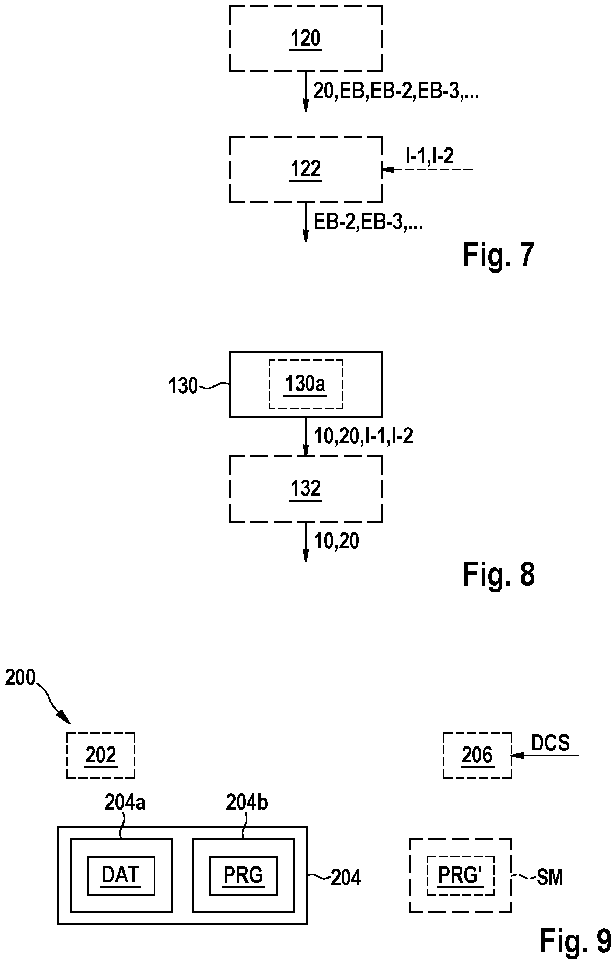

Bei weiteren beispielhaften Ausführungsformen, Fig. 7, ist vorgesehen, dass das Verfahren wenigstens eines der folgenden Elemente aufweist: a) Verwenden 120 eines bzw. des Generators 20, beispielsweise zum Erzeugen des Eingangsbilds EB und/oder weiterer Eingangsbilder EB-2, EB-3, ... für den Diskriminator 10, b) Erzeugen 122 weiterer Eingangsbilder EB-2, EB-3, ... für den Diskriminator 10 basierend auf den ersten Informationen I-1 und den zweiten Informationen I-2.

Bei weiteren beispielhaften Ausführungsformen, Fig. 8, ist vorgesehen, dass das Verfahren aufweist: Trainieren 130 wenigstens eines Elements von a) dem Diskriminator 10 und/oder von b) dem Generator 20, beispielsweise mittels Rückführen 130a (s. auch den Pfeil A1 gemäß Fig. 3) der ersten Informationen I-1 und/oder der zweiten Informationen I-2 als Eingangsgrößen I-sem, I-3 für den Generator 20 (Fig. 3), und, optional, Verwenden 132 (Fig. 8) des, beispielsweise trainierten, Diskriminators 10 und/oder des, beispielsweise trainierten, Generators 20, beispielsweise zur Synthese von weiteren Bildern, die beispielsweise unterschiedliche Eigenschaften, beispielsweise Stile, aufweisen.

Weitere beispielhafte Ausführungsformen, Fig. 9, beziehen sich auf eine Vorrichtung 200 zur Ausführung des Verfahrens gemäß den Ausführungsformen.

Bei weiteren beispielhaften Ausführungsformen, Fig. 9, ist vorgesehen, dass die Vorrichtung 200 aufweist: eine wenigstens einen Rechenkern aufweisende Recheneinrichtung ("Computer") 202, eine der Recheneinrichtung 202 zugeordnete Speichereinrichtung 204 zur zumindest zeitweisen Speicherung wenigstens eines der folgenden Elemente: a) Daten DAT, z.B. die Bilddaten BD bzw. daraus ableitbare Daten, z.B. charakterisierend die ersten Informationen I-1 und/oder die zweiten Informationen I-2, b) Computerprogramm PRG, beispielsweise zur Ausführung des Verfahrens gemäß den Ausführungsformen.

Bei weiteren beispielhaften Ausführungsformen, Fig. 9, weist die Speichereinrichtung 204 einen flüchtigen Speicher (z.B. Arbeitsspeicher (RAM)) 204a auf, und/oder einen nichtflüchtigen (NVM-) Speicher (z.B. Flash-EEPROM) 204b, oder eine Kombination hieraus oder mit anderen, nicht explizit genannten Speichertypen.

Weitere beispielhafte Ausführungsformen beziehen sich auf ein computerlesbares Speichermedium SM, umfassend Befehle PRG', die bei der Ausführung durch einen Computer 202 diesen veranlassen, das Verfahren gemäß den Ausführungsformen auszuführen.

Weitere beispielhafte Ausführungsformen beziehen sich auf ein Computerprogramm PRG, PRG', umfassend Befehle, die bei der Ausführung des Programms PRG durch einen Computer 202 diesen veranlassen, das Verfahren gemäß den Ausführungsformen auszuführen.

Weitere beispielhafte Ausführungsformen beziehen sich auf ein Datenträgersignal DCS, das das Computerprogramm PRG, PRG' gemäß den Ausführungsformen charakterisiert und/oder überträgt. Das Datenträgersignal DCS ist beispielsweise über eine optionale Datenschnittstelle 206 der Vorrichtung 200 austauschbar (sendbar und/oder empfangbar).

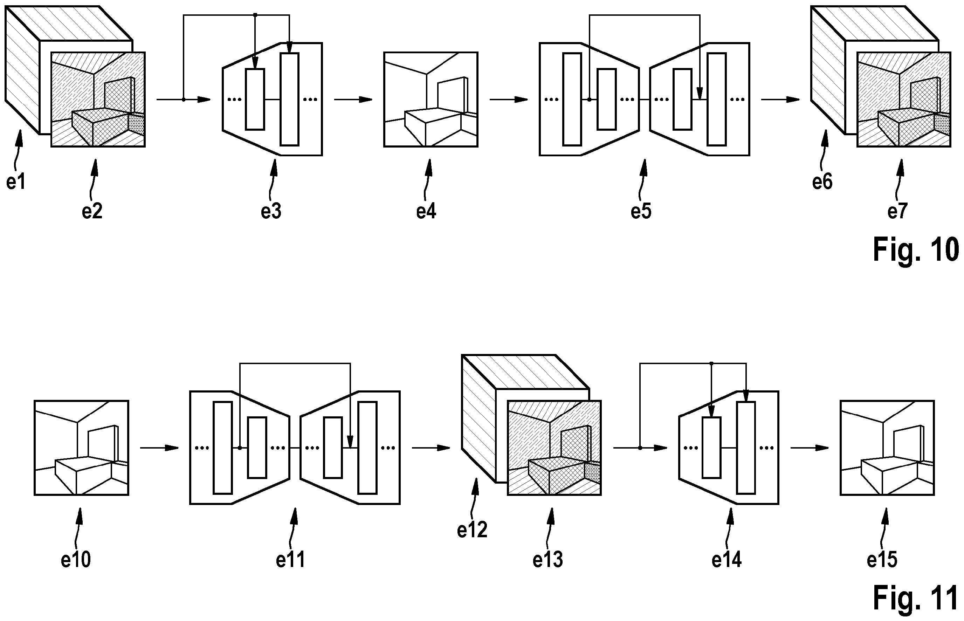

Fig. 10 zeigt schematisch Aspekte gemäß beispielhaften Ausführungsformen. Element e1 symbolisiert einen dreidimensionalen Tensor, z.B. Rauschtensor, und Element e2 symbolisiert semantische Informationen, z.B. in Form einer semantischen Karte, die jedem Bildelement eines durch einen Generator e3 basierend auf den Elementen e1, e2 zu erzeugenden, z.B. realistischen, Bilds e4 eine semantische Bedeutung eines Objekts, zu dem dieses Bildelement gehört, zuordnet.

Bei weiteren beispielhaften Ausführungsformen wird die semantische Karte e2 z.B. als Karten-Tensor aus mehreren Kanälen bereitgestellt. Jeder Kanal gibt z.B. alle Bildelemente der zu erzeugenden realistischen Bilder e4 an, denen die semantische Karte e2 eine konkrete semantische Bedeutung zuordnet. Wenn das zu erzeugende realistische Bild e4 beispielsweise mehrere gleichartige Fahrzeuge und mehrere Bäume umfasst, werden sich die Bildelemente, die zu Fahrzeugen gehören, auf einem Kanal "Fahrzeug" sammeln. Ebenso werden sich die Bildelemente, die zu Bäumen gehören, auf einem Kanal "Baum" sammeln.

Bei weiteren beispielhaften Ausführungsformen wird mindestens eine Menge variabler Bildelemente der zu erzeugenden realistischen Bilder bereitgestellt. "Variabel" bedeutet in diesem Zusammenhang, dass es gerade für diese Bildelemente erwünscht ist, dass sie sich von einem realistischen Bild zum nächsten ändern. Mit dem Verfahren wird bei weiteren beispielhaften Ausführungsformen also z.B. das Ziel verfolgt, aus ein und derselben semantischen Karte e2, die eine Szenerie (vorliegend beispielhaft ein Raum mit einem Bett und Fenstern) beschreibt, mehrere verschiedene Bilder dieser Szenerie zu erzeugen.

Bei weiteren beispielhaften Ausführungsformen wird der Rauschtensor e1 z.B. unter Heranziehung von Werten, die aus mindestens einer Zufallsverteilung gezogen wurden, mit mehreren Kanälen erzeugt. Diejenigen Werte des Rauschtensors e1, die sich auf die Menge der variablen Bildelemente beziehen, werden z.B. für jedes zu erzeugende, z.B. realistische, Bild e4 neu gezogen. Diejenigen Werte des Rauschtensors e1, die sich nicht auf die Menge der variablen Bildelemente beziehen, bleiben für mehrere, beispielsweise alle, zu erzeugenden realistischen Bilder konstant.

Bei weiteren beispielhaften Ausführungsformen werden die Kanäle des Karten-Tensors z.B. mit den Kanälen des Rauschtensors zu einem Eingabetensor (nicht gezeigt) zusammengeführt. Dieser Eingabetensor wird von dem (z.B. bereits trainierten) Generator e3 auf mindestens ein realistisches Bild e4 abgebildet.

Element e5 symbolisiert einen Diskriminator, z.B. ähnlich oder identisch zu dem Diskriminator 10 gemäß Fig. 2, 3. Der Diskriminator 10 ermittelt die ersten Informationen e7, z.B. in Form einer semantischen Karte bzw. label map, und die zweiten Informationen e8, z.B. in Form eines Rauschtensors.

Fig. 11 zeigt schematisch Aspekte gemäß beispielhaften Ausführungsformen. Element e10 symbolisiert ein Eingangsbild, Element e11 symbolisiert den Diskriminator 10, Element e12 symbolisiert die zweiten Informationen I-2, z.B. organisiert in Form eines Rauschtensors, Element e13 symbolisiert die ersten Informationen I-1, z.B. in Form einer semantischen Karte. Element e14 symbolisiert den Generator 20, der basierend auf den Informationen e12, e13 ein Bild e15 erzeugt.

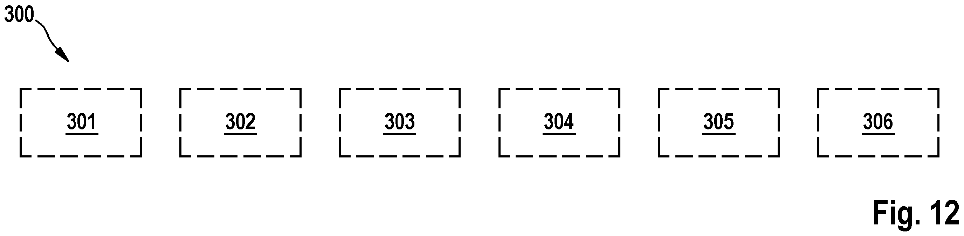

Weitere beispielhafte Ausführungsformen, Fig. 12, beziehen sich auf eine Verwendung 300 des Verfahrens gemäß den Ausführungsformen und/oder der Vorrichtung 200 gemäß den Ausführungsformen und/oder des computerlesbaren Speichermediums SM gemäß den Ausführungsformen und/oder des Computerprogramms PRG, PRG' gemäß den Ausführungsformen und/oder des Datenträgersignals DCS gemäß den Ausführungsformen für wenigstens eines der folgenden Elemente: a) Erzeugen 301 von Bildern, beispielsweise fotorealistischer Bilder, beispielsweise für ein Training von Verfahren und/oder Systemen, die Bilder Verarbeiten, beispielsweise für Anwendungen im Bereich des autonomen Fahrens, b) multi-modale semantische Synthese 302 von Bildern, c) Modifizieren 303 von, beispielsweise bestehenden realen oder synthetischen, Bildern, d) Steigern 304 einer Effizienz für das Trainieren des Diskriminators 10 und/oder Generators 20, e) Erhöhen 305 einer Stabilität für das Trainieren des Diskriminators und/oder Generators, f) Vereinfachen 306 von gemischten Strukturen aufweisend Strukturmerkmale von Generative Adversarial Networks, GAN, und Netzen vom Autoencoder-Typ.

Bei weiteren beispielhaften Ausführungsformen kann das Prinzip gemäß den Ausführungsformen z.B. zur Verarbeitung von digitalen bzw. digitalisierten Bildern verwendet werden, z.B. von wenigstens einem der folgenden Typen: a) Kamerabild, b) Videobild, c) RADAR-Bild, d) LIDAR-Bild, e) Ultraschall-Bild, f) Bewegungs ("motion")-Bild, g) thermisches Bild.

Bei weiteren beispielhaften Ausführungsformen kann das Prinzip gemäß den Ausführungsformen z.B. zum Trainieren von neuronalen Netzen bzw. Strukturen aufweisend mehrere neuronale Netze verwendet werden.

Bei weiteren beispielhaften Ausführungsformen kann das Prinzip gemäß den Ausführungsformen z.B. zum Erzeugen von Trainingsdaten für neuronale Netze bzw. Strukturen aufweisend mehrere neuronale Netze verwendet werden, beispielsweise zur Erzeugung realistischer Bilder mit z.B. auf Bildelementebene unterschiedlichen Stilen bzw. Eigenschaften.

Bei weiteren beispielhaften Ausführungsformen kann das Prinzip gemäß den Ausführungsformen z.B. zum Erweitern der OASIS-Architektur verwendet werden, die z.B. beschrieben ist in: Sushko, V., Schönfeld, E., Zhang, D. et al. OASIS: Only Adversarial Supervision for Semantic Image Synthesis. Int J Comput Vis 130, 2903-2923 (2022). https://doi.org/10.1007/s11263-022-01673-x, s. dort z.B. Fig. 3 rechts, "OASIS".

Bei weiteren beispielhaften Ausführungsformen kann das Prinzip gemäß den Ausführungsformen z.B. für eine bildelementweise Prädiktion von einen Stil bzw. Eigenschaften eines Bilds EB, AB charakterisierenden Informationen, z.B. "Stilvektoren", z.B. in Form von Komponenten des vorstehend beschriebenen Tensors T (Fig. 1) verwendet werden, wodurch bei weiteren beispielhaften Ausführungsformen z.B. ein Training von z.B. auf der OASIS-Architektur basierenden Strukturen von neuronalen Netzen vereinfacht werden kann.

Bei weiteren beispielhaften Ausführungsformen kann das Prinzip gemäß den Ausführungsformen z.B. dazu verwendet werden, eine mit einem GAN assoziierte Trainingskonfiguration zu erweitern mit einem Autoencoder-ähnlichen Training, s. z.B. Fig. 10, 11.

Bei weiteren beispielhaften Ausführungsformen kann das Prinzip gemäß den Ausführungsformen, s. z.B. Fig. 10, 11, z.B. verwendet werden, um eine Mode-Deckung (z.B. mode coverage) eines GAN zu verbessern. Die Mode-Deckung bezieht sich auf die Fähigkeit eines generativen adversariellen Netzwerks, GAN, verschiedene Moden oder verschiedene Merkmalsausprägungen eines Trainingsdatensatzes zu erfassen und korrekt wiederzugeben. Eine "Mode" kann z.B. als ein charakteristisches Merkmal oder eine spezifische Verteilung im Trainingsdatensatz betrachtet werden.

Bei weiteren beispielhaften Ausführungsformen kann das Prinzip gemäß den Ausführungsformen z.B. basierend auf einem Vorhandensein oder Nichtvorhandensein von gekennzeichneten Daten (labeled data) verwendet werden.

Bei weiteren beispielhaften Ausführungsformen können ein oder mehrere der folgenden Aspekte als Verlustterme (loss terms) für ein Training verwendet werden:
a) GAN-artig: adversarielles Training des Generators, um den Diskriminator dazu zu bringen, die gewünschte Klasse vorherzusagen,
b) GAN-artig: Verlust der Stilrekonstruktion, beispielsweise "style reconstruction loss",
c) Autoencoder-artig: Verlust der Diskriminator-Klassifizierung bei echten Trainingsbildern (beispielsweise "discriminator classification loss on real training images"),
d) Autoencoder-artig: Verlust bei der Bildrekonstruktion zwischen echtem und synthetischem (also durch den Generator 20 generierten) Bild (beispielsweise "image reconstruction loss between real and fake image").

Bei weiteren beispielhaften Ausführungsformen können die mittels des Generators 20 zu erzeugenden Bilder z.B. insbesondere in Bezug auf eine vorgegebene Anwendung realistisch sein. Hierbei kann "realistisch" z.B. bedeuten, dass sich die Bilder in einer nachgeschalteten Verarbeitung, wie beispielsweise beim Trainieren eines Bildklassifikators, in gleicher Weise nutzen lassen wie z.B. mit physikalischen Sensoren aufgenommene Bilder.

Bei weiteren beispielhaften Ausführungsformen können z.B. mittels des Generators 20 realistisch erzeugte Bilder beispielsweise genutzt werden, um einen Vorrat von realen, mit Sensoren aufgenommenen und anschließend "gelabelten" Trainingsbildern für einen Bildklassifikator anzureichern.

## Patentansprüche

1. Verfahren, beispielsweise computerimplementiertes Verfahren, zum Verarbeiten von, beispielsweise wenigstens, ein Eingangsbild (EB) charakterisierenden Bilddaten (BD), aufweisend: Bereitstellen (100) des Eingangsbilds (EB), Ermitteln (102) erster Informationen (I-1), die eine semantische Segmentierung (EB-SS) des Eingangsbilds (EB) charakterisieren, mittels eines Diskriminators (10), Ermitteln (104) zweiter Informationen (I-2), die beispielsweise von den ersten Informationen (I-1) verschieden sind, und die mit dem Eingangsbild (EB) assoziierte Eigenschaften (EB-EIG) charakterisieren, mittels des Diskriminators (10).

2. Verfahren nach Anspruch 1, wobei das Bereitstellen (100) des Eingangsbilds (EB) wenigstens eines der folgenden Elemente aufweist: a) Ermitteln (100a) des Eingangsbilds (EB) mittels eines Generators (20), beispielsweise basierend auf semantischen Informationen (I-sem) und basierend auf dritten Informationen (I-3), die Eigenschaften des zu ermittelnden Eingangsbilds (EB) charakterisieren, b) Empfangen (100b) des Eingangsbilds (EB) von einer weiteren Einheit (30), c) Verwenden (100c) eines realen Eingangsbilds.

3. Verfahren nach wenigstens einem der vorstehenden Ansprüche, wobei die mit dem Eingangsbild (EB) assoziierten Eigenschaften (EB-EIG) einen Stil (EB-STYLE) des Eingangsbilds (EB) charakterisieren, beispielsweise einen Stil wenigstens eines individuellen Bildelements, beispielsweise einen jeweiligen Stil mehrerer unterschiedlicher Bildelemente, beispielsweise einen jeweiligen Stil aller Bildelemente des Eingangsbilds (EB).

4. Verfahren nach wenigstens einem der vorstehenden Ansprüche, wobei die zweiten Informationen (I-2) a) für mehrere, beispielsweise alle, Bildelemente des Eingangsbilds (EB) jeweils mittels eines Vektors charakterisierbar sind, beispielsweise repräsentiert werden, und/oder b) mittels eines dreidimensionalen Tensors (T) charakterisierbar sind, beispielsweise repräsentiert werden.

5. Verfahren nach wenigstens einem der vorstehenden Ansprüche, aufweisend: Verwenden (106) der ersten Informationen (I-1) und/oder der zweiten Informationen (I-2), beispielsweise für wenigstens eines der folgenden Elemente: a) Trainieren (106a) eines bzw. des Generators (20) zum Erzeugen von Bildern, b) Rekonstruieren (106b), beispielsweise bildelementweise Ermittlung, von Informationen, beispielsweise mit Rauschen assoziierten Informationen, die, beispielsweise von einem bzw. dem Generator (20), zur Bildung des Eingangsbilds (EB) verwendet worden sind, c) Vereinfachung (106c) eines Trainings wenigstens eines zur Verarbeitung der Bilddaten (BD) verwendbaren neuronalen Netzes.

6. Verfahren nach wenigstens einem der vorstehenden Ansprüche, wobei der Diskriminator (10) und/oder der Generator (20) wenigstens ein, beispielsweise künstliches, beispielsweise tiefes, neuronales Netz aufweist.

7. Verfahren nach wenigstens einem der vorstehenden Ansprüche, aufweisend: Verwenden (110) einer Encoder-Decoder-Einrichtung (EDE) als Diskriminator (10), wobei beispielsweise die Encoder-Decoder-Einrichtung (EDE) eine Encoder-Struktur (ENC) und eine Decoder-Struktur (DEC) aufweist, wobei die Encoder-Struktur (ENC) dazu ausgebildet ist, ein Bild, beispielsweise das Eingangsbild (EB), mittels mehrerer Verarbeitungsschichten (VS1, VS2, VS3, ...) in eine informationsreduzierte Repräsentation zu transformieren und die informationsreduzierte Repräsentation der Decoder-Struktur (DEC) zuzuführen, wobei beispielsweise die Decoder-Struktur (DEC) dazu ausgebildet ist, basierend auf der informationsreduzierten Repräsentation die ersten Informationen (I-1) und die zweiten Informationen (I-2) zu bilden.

8. Verfahren nach wenigstens einem der vorstehenden Ansprüche, aufweisend: Ermitteln (112) der semantischen Segmentierung (EB-SS) des Eingangsbilds (EB) mittels des Diskriminators (10), wobei die semantische Segmentierung (EB-SS) mehreren Bildelementen, beispielsweise jedem Bildelement, des Eingangsbilds (EB) eine semantische Bedeutung zuordnet, wobei beispielsweise die semantische Bedeutung mit einer vorgebbaren Anzahl von Klassen, beispielsweise N vielen Klassen, assoziiert ist, wobei optional eine Klasse zum Signalisieren vorgesehen ist, ob ein betreffendes Bildelement als nicht real, beispielsweise "fake", bewertet wird.

9. Verfahren nach wenigstens einem der vorstehenden Ansprüche, aufweisend wenigstens eines der folgenden Elemente: a) Verwenden (120) eines bzw. des Generators (20), beispielsweise zum Erzeugen (122) des Eingangsbilds (EB) und/oder weiterer Eingangsbilder (EB-2, EB-3, ...) für den Diskriminator (10), b) Erzeugen (122) weiterer Eingangsbilder (EB-2, EB-3, ...) für den Diskriminator (10) basierend auf den ersten Informationen (I-1) und den zweiten Informationen (I-2).

10. Verfahren nach wenigstens einem der vorstehenden Ansprüche, aufweisend: Trainieren (130) wenigstens eines Elements von a) dem Diskriminator (10) und/oder von b) dem Generator (20), beispielsweise mittels Rückführen (130a) der ersten Informationen (I-1) und/oder der zweiten Informationen (I-2) als Eingangsgrößen für den Generator (20), und, optional, Verwenden (132) des, beispielsweise trainierten, Diskriminators (10) und/oder des, beispielsweise trainierten, Generators (20).

11. Vorrichtung (200) zur Ausführung des Verfahrens nach wenigstens einem der vorstehenden Ansprüche.

12. Computerlesbares Speichermedium (SM), umfassend Befehle (PRG), die bei der Ausführung durch einen Computer (202) diesen veranlassen, das Verfahren nach wenigstens einem der Ansprüche 1 bis 10 auszuführen.

13. Computerprogramm (PRG), umfassend Befehle, die bei der Ausführung des Programms (PRG) durch einen Computer (202) diesen veranlassen, das Verfahren nach wenigstens einem der Ansprüche 1 bis 10 auszuführen.

14. Datenträgersignal (DCS), das das Computerprogramm (PRG) nach Anspruch 13 überträgt und/oder charakterisiert.

15. Verwendung (300) des Verfahrens nach wenigstens einem der Ansprüche 1 bis 10 und/oder der Vorrichtung (200) nach Anspruch 11 und/oder des computerlesbaren Speichermediums (SM) nach Anspruch 12 und/oder des Computerprogramms (PRG) nach Anspruch 13 und/oder des Datenträgersignals (DCS) nach Anspruch 14 für wenigstens eines der folgenden Elemente: a) Erzeugen (301) von Bildern, beispielsweise fotorealistischer Bilder, beispielsweise für ein Training von Verfahren und/oder Systemen, die Bilder Verarbeiten, beispielsweise für Anwendungen im Bereich des autonomen Fahrens, b) multi-modale semantische Synthese (302) von Bildern, c) Modifizieren (303) von, beispielsweise bestehenden realen oder synthetischen, Bildern, d) Steigern (304) einer Effizienz für das Trainieren des Diskriminators (10) und/oder Generators (20), e) Erhöhen (305) einer Stabilität für das Trainieren des Diskriminators (10) und/oder Generators (20), f) Vereinfachen (306) von gemischten Strukturen aufweisend Strukturmerkmale von Generative Adversarial Networks, GAN, und Netzen vom Autoencoder-Typ.

## Geänderte Patentansprüche

### Geänderte Patentansprüche gemäss Regel 137(2) EPÜ.

1. Verfahren, beispielsweise computerimplementiertes Verfahren, zum Verarbeiten von, beispielsweise wenigstens, ein Eingangsbild (EB) charakterisierenden Bilddaten (BD), aufweisend:
• Bereitstellen (100) des Eingangsbilds (EB),
• Ermitteln (102) erster Informationen (I-1), die eine semantische Segmentierung (EB-SS) des Eingangsbilds (EB) charakterisieren, mittels eines Diskriminators (10),
• Ermitteln (104) zweiter Informationen (I-2), die beispielsweise von den ersten Informationen (I-1) verschieden sind, und die mit dem Eingangsbild (EB) assoziierte Eigenschaften (EB-EIG) charakterisieren, mittels des Diskriminators (10), wobei die mit dem Eingangsbild (EB) assoziierten Eigenschaften (EB-EIG) einen jeweiligen Stil (EB-STYLE) mehrerer unterschiedlicher Bildelemente, beispielsweise einen jeweiligen Stil (EB-EIG) aller Bildelemente des Eingangsbilds (EB), charakterisieren.

2. Verfahren nach Anspruch 1, wobei das Bereitstellen (100) des Eingangsbilds (EB) wenigstens eines der folgenden Elemente aufweist: a) Ermitteln (100a) des Eingangsbilds (EB) mittels eines Generators (20), beispielsweise basierend auf semantischen Informationen (I-sem) und basierend auf dritten Informationen (I-3), die Eigenschaften des zu ermittelnden Eingangsbilds (EB) charakterisieren, b) Empfangen (100b) des Eingangsbilds (EB) von einer weiteren Einheit (30), c) Verwenden (100c) eines realen Eingangsbilds.

3. Verfahren nach wenigstens einem der vorstehenden Ansprüche, wobei die zweiten Informationen (I-2) a) für mehrere, beispielsweise alle, Bildelemente des Eingangsbilds (EB) jeweils mittels eines Vektors charakterisierbar sind, beispielsweise repräsentiert werden, und/oder b) mittels eines dreidimensionalen Tensors (T) charakterisierbar sind, beispielsweise repräsentiert werden.

4. Verfahren nach wenigstens einem der vorstehenden Ansprüche, aufweisend: Verwenden (106) der ersten Informationen (I-1) und/oder der zweiten Informationen (I-2), beispielsweise für wenigstens eines der folgenden Elemente: a) Trainieren (106a) eines bzw. des Generators (20) zum Erzeugen von Bildern, b) Rekonstruieren (106b), beispielsweise bildelementweise Ermittlung, von Informationen, beispielsweise mit Rauschen assoziierten Informationen, die, beispielsweise von einem bzw. dem Generator (20), zur Bildung des Eingangsbilds (EB) verwendet worden sind, c) Vereinfachung (106c) eines Trainings wenigstens eines zur Verarbeitung der Bilddaten (BD) verwendbaren neuronalen Netzes.

5. Verfahren nach wenigstens einem der vorstehenden Ansprüche, wobei der Diskriminator (10) und/oder der Generator (20) wenigstens ein, beispielsweise künstliches, beispielsweise tiefes, neuronales Netz aufweist.

6. Verfahren nach wenigstens einem der vorstehenden Ansprüche, aufweisend: Verwenden (110) einer Encoder-Decoder-Einrichtung (EDE) als Diskriminator (10), wobei beispielsweise die Encoder-Decoder-Einrichtung (EDE) eine Encoder-Struktur (ENC) und eine Decoder-Struktur (DEC) aufweist, wobei die Encoder-Struktur (ENC) dazu ausgebildet ist, ein Bild, beispielsweise das Eingangsbild (EB), mittels mehrerer Verarbeitungsschichten (VS1, VS2, VS3, ...) in eine informationsreduzierte Repräsentation zu transformieren und die informationsreduzierte Repräsentation der Decoder-Struktur (DEC) zuzuführen, wobei beispielsweise die Decoder-Struktur (DEC) dazu ausgebildet ist, basierend auf der informationsreduzierten Repräsentation die ersten Informationen (I-1) und die zweiten Informationen (I-2) zu bilden.

7. Verfahren nach wenigstens einem der vorstehenden Ansprüche, aufweisend: Ermitteln (112) der semantischen Segmentierung (EB-SS) des Eingangsbilds (EB) mittels des Diskriminators (10), wobei die semantische Segmentierung (EB-SS) mehreren Bildelementen, beispielsweise jedem Bildelement, des Eingangsbilds (EB) eine semantische Bedeutung zuordnet, wobei beispielsweise die semantische Bedeutung mit einer vorgebbaren Anzahl von Klassen, beispielsweise N vielen Klassen, assoziiert ist, wobei optional eine Klasse zum Signalisieren vorgesehen ist, ob ein betreffendes Bildelement als nicht real, beispielsweise "fake", bewertet wird.

8. Verfahren nach wenigstens einem der vorstehenden Ansprüche, aufweisend wenigstens eines der folgenden Elemente: a) Verwenden (120) eines bzw. des Generators (20), beispielsweise zum Erzeugen (122) des Eingangsbilds (EB) und/oder weiterer Eingangsbilder (EB-2, EB-3, ...) für den Diskriminator (10), b) Erzeugen (122) weiterer Eingangsbilder (EB-2, EB-3, ...) für den Diskriminator (10) basierend auf den ersten Informationen (I-1) und den zweiten Informationen (I-2).

9. Verfahren nach wenigstens einem der vorstehenden Ansprüche, aufweisend: Trainieren (130) wenigstens eines Elements von a) dem Diskriminator (10) und/oder von b) dem Generator (20), beispielsweise mittels Rückführen (130a) der ersten Informationen (I-1) und/oder der zweiten Informationen (I-2) als Eingangsgrößen für den Generator (20), und, optional, Verwenden (132) des, beispielsweise trainierten, Diskriminators (10) und/oder des, beispielsweise trainierten, Generators (20).

10. Vorrichtung (200) zur Ausführung des Verfahrens nach wenigstens einem der vorstehenden Ansprüche.

11. Computerlesbares Speichermedium (SM), umfassend Befehle (PRG), die bei der Ausführung durch einen Computer (202) diesen veranlassen, das Verfahren nach wenigstens einem der Ansprüche 1 bis 9 auszuführen.

12. Computerprogramm (PRG), umfassend Befehle, die bei der Ausführung des Programms (PRG) durch einen Computer (202) diesen veranlassen, das Verfahren nach wenigstens einem der Ansprüche 1 bis 9 auszuführen.

13. Datenträgersignal (DCS), das das Computerprogramm (PRG) nach Anspruch 12 überträgt und/oder charakterisiert.

14. Verwendung (300) des Verfahrens nach wenigstens einem der Ansprüche 1 bis 10 und/oder der Vorrichtung (200) nach Anspruch 10 und/oder des computerlesbaren Speichermediums (SM) nach Anspruch 11 und/oder des Computerprogramms (PRG) nach Anspruch 12 und/oder des Datenträgersignals (DCS) nach Anspruch 13 für wenigstens eines der folgenden Elemente: a) Erzeugen (301) von Bildern, beispielsweise fotorealistischer Bilder, beispielsweise für ein Training von Verfahren und/oder Systemen, die Bilder Verarbeiten, beispielsweise für Anwendungen im Bereich des autonomen Fahrens, b) multi-modale semantische Synthese (302) von Bildern, c) Modifizieren (303) von, beispielsweise bestehenden realen oder synthetischen, Bildern, d) Steigern (304) einer Effizienz für das Trainieren des Diskriminators (10) und/oder Generators (20), e) Erhöhen (305) einer Stabilität für das Trainieren des Diskriminators (10) und/oder Generators (20), f) Vereinfachen (306) von gemischten Strukturen aufweisend Strukturmerkmale von Generative Adversarial Networks, GAN, und Netzen vom Autoencoder-Typ.
